# EUROPEAN PATENT SPECIFICATION

(11) **EP 2 909 908 B1**
(45) Date of publication and mention of the grant of the patent: **17.01.2024**
(21) Application number: 13780313.6
(22) Date of filing: 14.10.2013
(51) Int. Cl.: H02H 3/08, H02H 7/26, H02H 3/44, H02H 7/04, G01R 31/08, H02H 7/28

(54) **METHOD OF OPERATE IS-LIMITERS IN RING SYSTEMS**
VERFAHREN ZUM BETRIEB VON LS-BEGRENZERN IN RINGSYSTEMEN
PROCÉDÉ DE FONCTIONNEMENT DE LIMITEURS DE SYSTÈME D'INFORMATION DANS DES SYSTÈMES EN ANNEAU

(30) Priority: 16.10.2012 EP 12007164
(43) Date of publication of application: 26.08.2015
(73) Proprietor: ABB Schweiz AG, 5400 Baden (CH)
(72) Inventor: HARTUNG, Karl-Heinz, 53604 Bad Honnef (DE); DUCKHEIM, Ralf, 42115 Wuppertal (DE); GRAFE, Volker, 45479 Mülheim (DE)
(74) Representative: Maiwald GmbH
(86) International application number: PCT/EP2013/003080
(87) International publication number: WO 2014/060085

(56) References cited:
- EP-A1- 2 442 417
- DE-A1- 2 712 470
- DE-A1- 2 800 076
- DE-A1- 3 642 136
- GB-A- 543 684
- GB-A- 2 198 001
- GB-A- 191 027 312

## Description

### Field of the invention

The invention relates to an electrical network in form of a ring system comprising several infeed transformers which are parallel arranged one to another between a sourcing busbar / cable system and a ring load busbar / cable system, wherein the ring load busbar / cable system comprises several current limiters which are arranged to both sides of junction points of each infeed transformer to the ring load busbar / cable system in order to reduce current in the ring load busbar / cable system in a fault event.

### Background of the invention

EP2442417A1 describes a power distribution system for a dynamically positioned vessel, the power distribution system comprising: a plurality of busses comprising a first bus to which a load is connectable; a plurality of switches comprising a first switch and a second switch, wherein the plurality of busses is connected via the plurality of switches in a interjacent manner to form a ring, the first bus is connected in between the first switch and the second switch, and the power distribution system is configured to open the first switch and concurrently open the second switch, if a first current flowing via the first switch in a direction towards the first bus is above a predetermined current threshold for longer than a predetermined time duration and a second current flowing via the second switch in a direction towards the first bus is above the predetermined current threshold for longer than the predetermined time duration, thereby disconnecting the first bus from the ring while all other buses remain connected together..

The subject matter of the present invention is especially applicable to electrical utility networks, industrial networks and private networks. In case of a single-phase, double- phase or three-phase fault in such networks the voltage will drop for minimum four half cycles in the complete system as the protection system in cooperation with the switching device require these time periods to switch off the current. This voltage drop causes reliability problems for voltage sensitive devices and systems, which are connected to such an electrical network, for example electrical devices in hospitals. The electrical network according to the present invention is provided in form of a ring system comprising multiple infeed transformers.

### Brief description of the invention

It is an object of the present invention to provide an electrical network in form of ring system according to the preamble of Claim 1 in which the time period for voltage drops in a fault event is limited by simple electrical means.

According to the invention the two current limiters to both sides of the junction point of the faulted infeed transformer are simultaneously tripped in order to reduce the current in the ring load busbar / cable system in fault event.

Due to this special solution the time period of voltage drop in the parts of the electrical network, which do not contain the fault area directly, can be limited to one half cycle and less.

The at least two current limiters which are necessary for at least one infeed transformer are provided with special tripping criteria, wherein the instantaneous current of the summation current of one of the different protection zones defined by the current limiters is logically AND combined with the rate of rise of the same summation current.

The summation currents are considered in such a way, that the reaction time of the further processing is reduced to minimum.

These special tripping criteria for operating current limiters in a ring system are faster than any other electrical devices and systems, especially faster than already existing protection relays in combination with circuit-breakers. The solution according to the invention provides a safer electrical supply for voltage sensitive devices and systems and it additionally reduces the arc energy and therefore the impacts in case of arc faults.

### Brief description of the drawings

The forgoing and other aspects of the invention will become apparent following the detailed description of the invention, when considering in conjunction with the enclosed drawings.

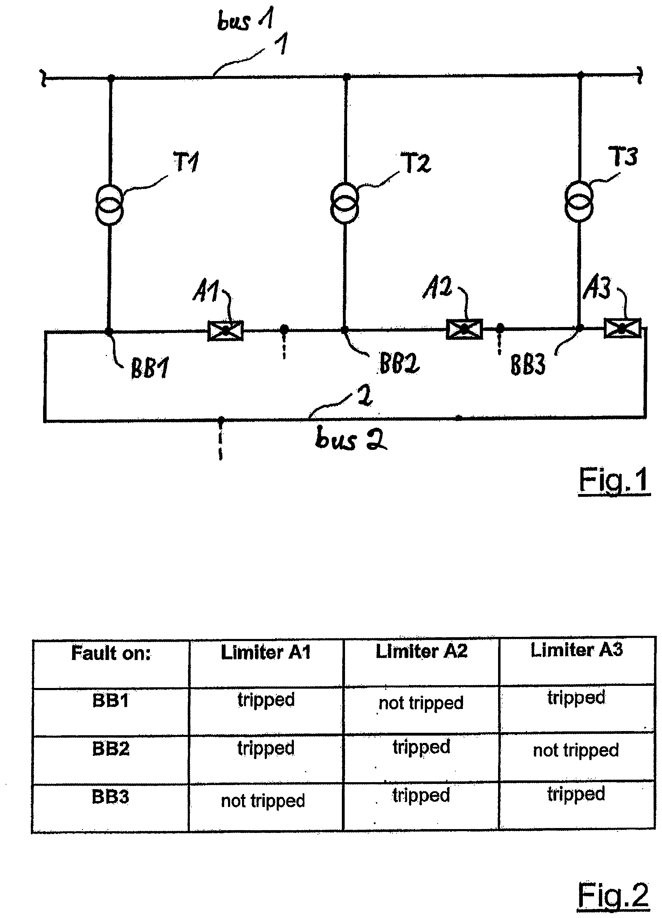

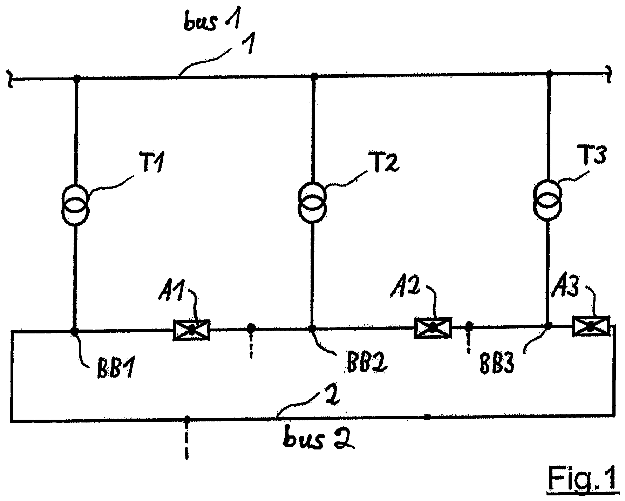

Figure 1 shows a circuit diagram of an electrical network in form of a ring system, and Figure 2 shows a table of the switching states of the current limiters integrated in the ring system as shown in Figure 1.

### Detailed description of drawings

The electrical network as shown in Figure 1 comprises three infeed transformers T1 , T2 and T3 in order to provide the power supply. The said three infeed transformers T1 , T2 and T3 are parallel arranged one in to another between a sourcing busbar / cable system (1) and a ring load busbar / cable system (2) on the load side of the electrical network.

The ring load busbar / cable system (2) comprises several current limiters A1, A2 and A3 arranged to both sides of junction points BB1, BB2 and BB3, of each infeed transformer T1, T2 or T3 respectively. The said junction points BB1, BB2 and BB3 connect the outgoing line of each infeed transformer T1 , T2 and T3 to the ring load busbar / cable system (2). The three current limiters A1, A2 and A3 of the ring load busbar / cable system (2) reduce the current in the ring load busbar / cable system (2) in fault event according to specific tripping criteria as shown in table of Figure 2.

The first infeed transformers T1 correspond to the two current limiters A1 and A3 which are arranged to both sides of the junction point BB1. The second transformers T2 correspond to the two current limiters A2 and A1 which are arranged to both sides of the junction point BB2. The third infeed transformer T3 correspond to the two current limiters A3 and A2 which are arranged to both sides of the corresponding junction point Each two current limiters A1 , A3; A2, A1 ; A3, A1 of the corresponding infeed transformer T1 to T3 are simultaneously tripped in order to reduce the current in the ring load busbar / cable system in fault event.

In view of Figure 2 the current limiters A1 and A3 will be tripped if a fault occurs between the elements transformer T1 , current limiter A1 and current limiter A3

(including junction point BB1 ). The current limiters A1 and A2 will be tripped if a fault occurs between the elements transformer T2, current limiter A1 and current limiter A2 (including junction point BB2). Finally, the current limiters A2 and A3 will be tripped if a fault occurs between the elements transformer T3, current limiter A2 and current limiter A3 (including junction point BB3).

The invention is not limited by the embodiment as descript above which is presented as an example only. It can be modified in various ways within the scope of protection defined by the patent claims. Specially, more or less than three infeed transformers can be integrated in a ring load busbar / cable system.

### Reference signs

1 sourcing busbar / cable system
2 ring load busbar / cable system
T1 ... Tn infeed transformers
BB1 ... BBn junction points
A1 ... An current limiters

## Claims

1. An electrical network in form of a ring system, the electrical network comprising:
- a first infeed transformer (T1), a second infeed transformer (T2), and a third infeed transformer (T3);
- a first current limiter (A3), a second current limiter (A1), and a third current limiter (A2);
- a sourcing busbar and cable system (1); and
- a ring load busbar and cable system (2);
wherein, the first infeed transformer (T1), the second infeed transformer (T2), and the third infeed transformer are arranged parallel to one another between the sourcing busbar and cable system (1) and the ring load busbar and cable system (2);
wherein, the first infeed transformer (T1) connects to the ring load busbar and cable system (2) at a first junction point (BB1);
wherein, the second infeed transformer (T2) connects to the ring load busbar and cable system (2) at a second junction point (BB2);
wherein, the third infeed transformer (T3) connects to the ring load busbar and cable system (2) at a third junction point (BB3);
wherein, the first current limiter (A3), the second current limiter (A1), and the third current limiter (A2) are arranged on the ring load busbar and cable system (2);
wherein the first current limiter (A3) and the second current limiter (A1) are arranged either side of the first junction point (BB1) and are configured to simultaneously trigger if a fault occurs between the elements comprising the first infeed transformer (T1), the first current limiter (A3) and the second current limiter (A1), including the first junction point (BB1);
wherein the second current limiter (A1) and the third current limiter (A2) are arranged either side of the second junction point (BB2) and are configured to simultaneously trigger if a fault occurs between the elements comprising the second infeed transformer (T2), the second current limiter (A1) and the third current limiter (A2), including the second junction point (BB2);
wherein the third current limiter (A2) and the first current limiter (A3) are arranged either side of the third junction point (BB3) are configured to simultaneously trigger if a fault occurs between the elements comprising the third infeed transformer (T3), the third current limiter (A2) and the first current limiter (A3), including the third junction point (BB3); and
wherein, simultaneous triggering of the current limiters either side of a junction point is configured to reduce the current in the ring load busbar and cable system (2).

2. Electrical network according to claim 1, wherein, simultaneous triggering of the current limiters either side of a junction point is configured to drop a voltage across the ring system with a time period that is one half cycle or less of a supply.

3. Electrical network according to claim 2, wherein the supply is a single-phase, double-phase, or three-phase supply.

## Patentansprüche

1. Elektrisches Netzwerk in Form eines Ringsystems, wobei das elektrische Netzwerk Folgendes umfasst:
- einen ersten Einspeisetransformator (T1), einen zweiten Einspeisetransformator (T2) und einen dritten Einspeisetransformator (T3);
- einen ersten Strombegrenzer (A3), einen zweiten Strombegrenzer (A1) und einen dritten Strombegrenzer (A2) ;
- ein Quellen-Sammelschienen- und -Kabelsystem (1); und
- ein Ringlast-Sammelschienen- und -Kabelsystem (2);
wobei der erste Einspeisetransformator (T1), der zweite Einspeisetransformator (T2) und der dritte Einspeisetransformator parallel zueinander zwischen dem Quellen-Sammelschienen- und -Kabelsystem (1) und dem Ringlast-Sammelschienen- und -Kabelsystem (2) angeordnet sind;
wobei der erste Einspeisetransformator (T1) an einem ersten Verbindungspunkt (BB1) mit dem Ringlast-Sammelschienen- und -Kabelsystem (2) verbunden ist;
wobei der zweite Einspeisetransformator (T2) an einem zweiten Verbindungspunkt (BB2) mit dem Ringlast-Sammelschienen- und -Kabelsystem (2) verbunden ist;
wobei der dritte Einspeisetransformator (T3) an einem dritten Verbindungspunkt (BB3) mit dem Ringlast-Sammelschienen- und -Kabelsystem (2) verbunden ist;
wobei der erste Strombegrenzer (A3), der zweite Strombegrenzer (A1) und der dritte Strombegrenzer (A2) auf dem Ringlast-Sammelschienen- und -Kabelsystem (2) angeordnet sind;
wobei der erste Strombegrenzer (A3) und der zweite Strombegrenzer (A1) auf beiden Seiten des ersten Verbindungspunkts (BB1) angeordnet sind und dazu ausgelegt sind, gleichzeitig auszulösen, wenn ein Fehler zwischen den Elementen auftritt, die den ersten Einspeisetransformator (T1), den ersten Strombegrenzer (A3) und den zweiten Strombegrenzer (A1), einschließlich des ersten Verbindungspunkts (BB1), umfassen;
wobei der zweite Strombegrenzer (A1) und der dritte Strombegrenzer (A2) auf beiden Seiten des zweiten Verbindungspunkts (BB2) angeordnet sind und dazu ausgelegt sind, gleichzeitig auszulösen, wenn ein Fehler zwischen den Elementen auftritt, die den zweiten Einspeisetransformator (T2), den zweiten Strombegrenzer (A1) und den dritten Strombegrenzer (A2), einschließlich des zweiten Verbindungspunkts (BB2), umfassen;
wobei der dritte Strombegrenzer (A2) und der erste Strombegrenzer (A3) auf beiden Seiten des dritten Verbindungspunkts (BB3) angeordnet sind und dazu ausgelegt sind, gleichzeitig auszulösen, wenn ein Fehler zwischen den Elementen auftritt, die den dritten Einspeisetransformator (T3), den dritten Strombegrenzer (A2) und den ersten Strombegrenzer (A3), einschließlich des dritten Verbindungspunkts (BB3), umfassen; und
wobei das gleichzeitige Auslösen der Strombegrenzer auf beiden Seiten eines Verbindungspunkts dazu ausgelegt ist, den Strom in dem Ringlast-Sammelschienen- und -Kabelsystem (2) zu reduzieren.

2. Elektrisches Netzwerk nach Anspruch 1, wobei das gleichzeitige Auslösen der Strombegrenzer auf beiden Seiten eines Verbindungspunkts dazu ausgelegt ist, einen Spannungsabfall an dem Ringsystem mit einer Zeitperiode, die einen halben Zyklus oder weniger einer Versorgung beträgt, zu bewirken.

3. Elektrisches Netzwerk nach Anspruch 2, wobei die Versorgung eine einphasige, zweiphasige oder dreiphasige Versorgung ist.

## Revendications

1. Réseau électrique sous forme d'un système en anneau, le réseau électrique comprenant :
- un premier transformateur d'alimentation (T1), un deuxième transformateur d'alimentation (T2) et un troisième transformateur d'alimentation (T3) ;
- un premier limiteur de courant (A3), un deuxième limiteur de courant (A1) et un troisième limiteur de courant (A2) ;
- une barre omnibus d'alimentation et un système de câbles (1) ; et
- une barre omnibus de charge en anneau et un système de câbles (2) ;
le premier transformateur d'alimentation (T1), le deuxième transformateur d'alimentation (T2) et le troisième transformateur d'alimentation étant agencés en parallèle les uns des autres entre la barre omnibus d'alimentation et le système de câbles (1) et la barre omnibus de charge en anneau et le système de câbles (2) ;
le premier transformateur d'alimentation (T1) se connectant à la barre omnibus de charge en anneau et au système de câbles (2) au niveau d'un premier point de jonction (BB1) ;
le deuxième transformateur d'alimentation (T2) se connectant à la barre omnibus de charge en anneau et au système de câbles (2) au niveau d'un deuxième point de jonction (BB2) ;
le troisième transformateur d'alimentation (T3) se connectant à la barre omnibus de charge en anneau et au système de câbles (2) au niveau d'un troisième point de jonction (BB3) ;
le premier limiteur de courant (A3), le deuxième limiteur de courant (A1) et le troisième limiteur de courant (A2) étant agencés sur la barre omnibus de charge en anneau et le système de câbles (2) ;
le premier limiteur de courant (A3) et le deuxième limiteur de courant (A1) étant agencés de chaque côté du premier point de jonction (BB1) et étant configurés pour se déclencher simultanément si un défaut survient entre les éléments comprenant le premier transformateur d'alimentation (T1), le premier limiteur de courant (A3) et le deuxième limiteur de courant (A1), y compris le premier point de jonction (BB1) ;
le deuxième limiteur de courant (A1) et le troisième limiteur de courant (A2) étant agencés de chaque côté du deuxième point de jonction (BB2) et étant configurés pour se déclencher simultanément si un défaut survient entre les éléments comprenant le deuxième transformateur d'alimentation (T2), le deuxième limiteur de courant (A1) et le troisième limiteur de courant (A2), y compris le deuxième point de jonction (BB2) ;
le troisième limiteur de courant (A2) et le premier limiteur de courant (A3) étant agencés de chaque côté du troisième point de jonction (BB3) et étant configurés pour se déclencher simultanément si un défaut survient entre les éléments comprenant le troisième point d'alimentation (T3), le troisième limiteur de courant (A2) et le premier limiteur de courant (A3), y compris le troisième point de jonction (BB3) ; et
le déclenchement simultané des limiteurs de courant de chaque côté d'un point de jonction étant configuré pour réduire le courant dans la barre omnibus de charge en anneau et le système de câbles (2).

2. Réseau électrique selon la revendication 1, le déclenchement simultané des limiteurs de courant de chaque côté d'un point de jonction étant configuré pour faire chuter une tension aux bornes du système en anneau avec une période de temps qui correspond à un demi-cycle ou moins d'une alimentation.

3. Réseau électrique selon la revendication 2, l'alimentation étant une alimentation à une phase, à deux phases ou triphasée.
